# EUROPÄISCHE PATENTANMELDUNG

(11) **EP 2 339 567 A2**
(43) Veröffentlichungstag der Anmeldung: **29.06.2011**
(21) Anmeldenummer: 10014691.9
(22) Anmeldetag: 17.11.2010
(51) Int. Cl.: G09F 9/33, G09F 9/35, G09F 13/22, G09F 19/22

(54) **Vorrichtung zur Anzeige und / oder Eingabe von Parametern**

(30) Priorität: 23.12.2009 DE 202009017436 U
(71) Anmelder: Thermozyklus GmbH & Co. Kg, 82131 Gauting (DE)
(72) Erfinder: Kunmerer, Christoph, 82131 Gauting (DE); Kummerer, Norbert, 85778 Haimhausen (DE)
(74) Vertreter: Prinz & Partner

(57) **Zusammenfassung**

Eine Vorrichtung zur Anzeige und/oder Eingabe von Parametern, insbesondere für eine gebäudetechnische Anwendung, umfasst ein Gehäuse, in dem eine Leuchtanzeige (18) untergebracht ist. Die Leuchtanzeige (18) ist hinter einer Abdeckung (12) angeordnet, wobei die Abdeckung (12) hinsichtlich Material und Dicke so ausgelegt ist, dass sie im ausgeschalteten Zustand der Leuchtanzeige (18) undurchsichtig, im eingeschalteten Zustand der Leuchtanzeige (18) jedoch für die Darstellung der Leuchtanzeige (18) durchlässig ist.

## Beschreibung

Die Erfindung betrifft eine Vorrichtung zur Anzeige und/oder Eingabe von Parametern, insbesondere für eine gebäudetechnische Anwendung, mit einem Gehäuse, in dem eine Leuchtanzeige untergebracht ist.

Für viele Anwendungen in der Hausautomation ist es notwendig, Sensoren in den einzelnen Räumen anzubringen, um bestimmte Werte zu messen, z.B. Temperatur, Feuchte, CO₂-Gehalt der Luft, etc. Dabei ist es vorteilhaft, wenn die gemessenen Werte im Raum auch angezeigt werden können. Ebenso ist es für Steuerungen oft notwendig, Sollwerte einzustellen, die dann ebenfalls angezeigt werden sollten.

Hierfür dienen insbesondere alpha-numerische oder graphische Anzeigeelemente, z.B. LCD-Displays oder Sieben-Segment-Anzeigen mit Leuchtdioden (LEDs). Diese Anzeigen werden an der Wand entweder auf Putz in eigenen Gehäusen montiert, oder auch unter Putz in Schalterserien von Herstellern elektrischer Lichtschalter integriert und meist mit mechanischen Tasten kombiniert.

Beispiele solcher aus dem Stand der Technik bekannter Vorrichtungen sind in der EP 1 731 984 A1 und in der DE 10 2004 016 604 A1 gezeigt.

Allen diesen Anzeigen ist gemeinsam, dass sie auch im ausgeschalteten Zustand sichtbar sind, weil man immer das Anzeigeelement sieht, auch wenn es nicht aktiviert oder beleuchtet ist, sei es direkt, oder durch ein Sichtfenster. Insbesondere im privaten Heimbereich ist vielen Benutzern dieser Anblick aber zu "technisch". Sie würden eine Anzeige bevorzugen, die im ausgeschalteten Zustand überhaupt nicht sichtbar ist und somit keinen Hinweis auf ein technisches Gerät gibt.

Aufgabe der Erfindung ist es, diesem Bedarf nachzukommen.

Gelöst wird diese Aufgabe durch eine Vorrichtung zur Anzeige und/oder Eingabe von Parametern, insbesondere für eine gebäudetechnische Anwendung, mit den Merkmalen des Anspruchs 1. Vorteilhafte und zweckmäßige Ausgestaltungen der erfindungsgemäßen Vorrichtung sind in den Unteransprüchen angegeben.

Die erfindungsgemäße Vorrichtung dient zur Anzeige und/oder Eingabe von Parametern, insbesondere für eine gebäudetechnische Anwendung, und umfasst ein Gehäuse, in dem eine Leuchtanzeige hinter einer Abdeckung untergebracht ist. Die Abdeckung ist hinsichtlich Material und Dicke so ausgelegt, dass sie im ausgeschalteten Zustand der Leuchtanzeige (bei normalem Umgebungslicht) undurchsichtig, im eingeschalteten Zustand der Leuchtanzeige jedoch für die Darstellung der Leuchtanzeige durchlässig ist. Unter "durchlässig" ist hier zu verstehen, dass die Darstellung der Leuchtanzeige unter normalen Umständen für einen Benutzer bei Betrachtung der Abdeckung sichtbar bzw. ablesbar ist.

Die Erfindung beruht auf der Erkenntnis, dass viele Materialien im Auflicht undurchsichtig sind, im Durchlicht aber durchscheinend werden, wenn die Schichtdicke gering genug ist und sie nicht zu dunkel eingefärbt sind. Viele gebräuchliche Kunststoffe (PVC, ABS, Polystyrol, etc.), aber auch z.B. leichte Holzarten (Fichte, Kiefer, Pappel) zeigen ein solches Verhalten. Auf dieser Erkenntnis aufbauend lässt sich gemäß der Erfindung eine dezente, unaufdringliche Anzeigevorrichtung realisieren, die im ausgeschalteten Zustand nicht als solche erkennbar ist. Im eingeschalteten Zustand sorgt die Vorrichtung aufgrund der vorher nicht sichtbaren Leuchtanzeige bei Nicht-Eingeweihten für einen überraschenden Effekt und vermittelt aufgrund der besonderen Art der Darstellung, bei der sämtliche Bauteile der Vorrichtung verborgen bleiben, einen sehr modernen und wertigen Eindruck.

Die erfindungsgemäße Vorrichtung lässt sich leicht in handelsübliche Schalterserien bzw. -programme (Lichtschalter, Steckdosen, etc.) integrieren. Deren Hersteller haben nämlich in der Regel sogenannte Blinddeckel für nicht benötigte Schalter-Öffnungen im Programm. Hinter einen solchen Blinddeckel montiert ist die erfindungsgemäße Vorrichtung im ausgeschalteten Zustand völlig unauffällig. Niemand würde dahinter etwas anderes als eventuell einen Lichtschalter vermuten. Erst wenn die Vorrichtung eingeschaltet ist, können Informationen abgelesen werden. Auch z.B. hinter einer Holzvertäfelung kann die erfindungsgemäße Vorrichtung völlig unsichtbar angebracht werden. Im ausgeschalteten Zustand ist in diesem Fall nicht einmal die Position der Vorrichtung erkennbar; sie wäre daher nur von Eingeweihten bedienbar.

In der bevorzugten Ausführungsform der Erfindung ist das Gehäuse der Vorrichtung ein Unterputz-Einbaugehäuse, das in einer Raumwand versenkt angebracht werden kann.

Die für die Sichtbarmachung der Darstellung der Leuchtanzeige benötigte Dicke der Abdeckung hängt im Wesentlichen von der Leuchtkraft der Anzeige und vom verwendeten Material ab. Bei Verwendung eines hellen Kunststoffmaterials, wie es in handelsüblichen Schalterserien eingesetzt wird, beträgt die Dicke der Abdeckung zumindest im Bereich der dahinter angeordneten Leuchtanzeige vorzugsweise etwa 1 mm.

Die Leuchtanzeige weist bevorzugt mehrere Segment-Anzeigen auf, beispielsweise kostengünstige Sieben-Segment-Anzeigen. Die Verwendung von Segment-Anzeigen hat allgemein den Vorteil, dass auf bewährte Bauteile zurückgegriffen werden kann.

Gemäß einer Weiterbildung der Erfindung umfasst die Vorrichtung auch eine oder mehrere hinter der Abdeckung angeordnete berührungsempfindliche Sensoren, die eine oder mehrere Tastflächen für Benutzereingaben definieren. So lässt sich eine interaktive Anzeige realisieren, die auch Benutzereingaben zur weiteren Verarbeitung ermöglicht, ohne dass im ausgeschalteten Zustand der Vorrichtung Tasten auf der Abdeckung zu sehen wären.

Um dem Benutzer die Position der Tastflächen anzuzeigen, sind den Tastflächen vorzugsweise Leuchtelemente (insbesondere LEDs) zugeordnet, wobei die Abdeckung hinsichtlich Material und Dicke so ausgelegt ist, dass sie im ausgeschalteten Zustand der Leuchtelemente undurchsichtig, im eingeschalteten Zustand der Leuchtelemente jedoch für die Darstellung der Leuchtelemente durchlässig ist.

Für eine intuitive Bedienung der Vorrichtung, bei der der Benutzer zur Tastenbetätigung einfach auf die als Tastfläche interpretierten Lichtpunkte drückt, weisen die berührungsempfindlichen Sensoren eine Öffnung auf, durch die ein Leuchtelement im eingeschalteten Zustand hindurchleuchtet.

Gemäß einer bevorzugten Anwendung der Erfindung ist die Vorrichtung Teil eines Raumthermostaten.

Der oben angesprochene "Überraschungseffekt" der erfindungsgemäßen Vorrichtung kommt besonders bei einer Ausführungsform zum Ausdruck, bei der die Vorrichtung keine von außen sichtbaren Bedienelemente aufweist.

Vorzugsweise ist die von außen sichtbare Außenseite der Abdeckung glatt und weist keine sichtbaren, den Gesamteindruck störenden Unterbrechungen auf.

Die Erfindung wird nachfolgend anhand eines Ausführungsbeispiels unter Bezugnahme auf die beigefügten Zeichnungen näher beschrieben. In den Zeichnungen zeigen:
- Figur 1 eine Draufsicht auf eine erfindungsgemäße Vorrichtung;
- Figur 2 eine seitliche Schnittansicht der Vorrichtung aus Figur 1; und
- Figur 3 ein Flussdiagramm eines grundlegenden Bedienungsablaufs für eine erfindungsgemäße Vorrichtung.

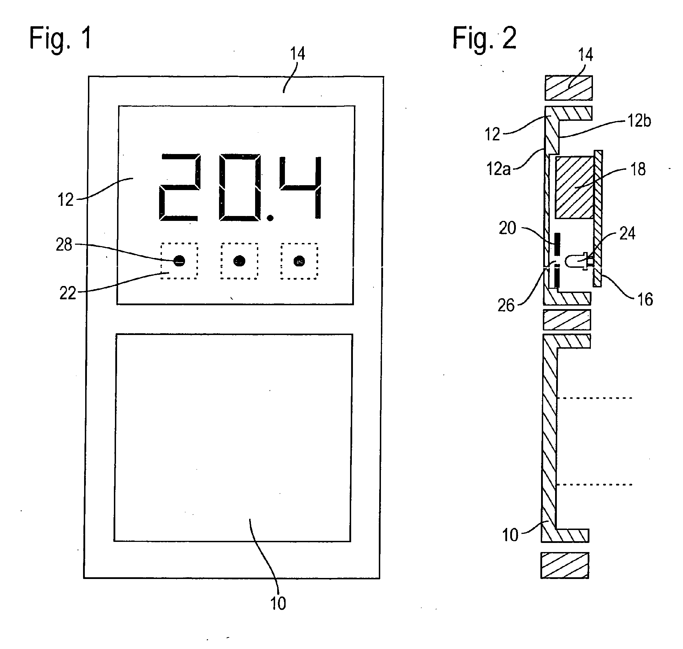

In **Figur 1** ist eine Vorrichtung zur Anzeige und Eingabe Parametern für eine gebäudetechnische Anwendung am Beispiel eines Raumthermostaten dargestellt. Die Vorrichtung ist in ein Standard-Unterputz-Einbaugehäuse integriert, wie es typischerweise für Steckdosen und/oder Lichtschalter verwendet wird. Im dargestellten Ausführungsbeispiel sind in der unteren Hälfte des Einbaugehäuses ein gewöhnlicher Lichtschalter 10 und in der oberen Hälfte die wesentlichen Komponenten der Anzeige-/Eingabe-Vorrichtung untergebracht. Selbstverständlich sind auch andere Einbauvarianten möglich.

Im eingebauten Zustand ist von der Vorrichtung nur die glatte, unterbrechungsfreie Vorderseite 12a einer Abdeckung 12 zu sehen, die die gesamte vom oberen Rahmen 14 des Einbaugehäuses umschlossene Fläche einnimmt. Auf der Vorderseite 12a der Abdeckung 12 sind keinerlei Tasten, Anzeigeelemente, Beschriftungen oder dergleichen angeordnet.

Der Aufbau und die dadurch erreichte Funktionalität der Vorrichtung gehen aus **Figur 2** hervor. Hinter der fest am Gehäuse angebrachten Abdeckung 12, die nur zu Wartungs- oder Reparaturzwecken abnehmbar ist, ist eine Trägerplatine 16 mit einer Leuchtanzeige 18 angeordnet. Im dargestellten Ausführungsbeispiel umfasst die Leuchtanzeige 18 mehrere (hier: drei) Sieben-Segment-Anzeigen, wie sie typischerweise in Digitaluhren, Radioweckern, etc. verwendet werden. Außerdem sind auf der Rückseite 12b der Abdeckung 12 eine oder mehrere berührungsempfindliche, vorzugsweise kapazitive Sensoren 20 angeordnet, die mehrere (hier: drei) Tastflächen 22 auf der Vorderseite 12a der Abdeckung 12 definieren. Jeder Tastfläche 22 ist ein auf der Trägerplatine 16 angeordnetes Leuchtelement 24, vorzugsweise eine LED, zugeordnet. Diese zusätzlichen Leuchtelemente 24 befinden sich jeweils hinter einer Öffnung 26 in der Mitte der zugehörigen Sensorfläche.

Material und Dicke der Abdeckung 12 sind zumindest im Bereich der Leuchtanzeige 18 und der Tastflächen 22 so gewählt, dass dieser Bereich der Abdeckung 12 im Auflicht undurchsichtig ist, im Durchlicht aber durchscheinend ist. Im ausgeschalteten Zustand der Vorrichtung ist kein Element der Vorrichtung hinter der Abdeckung 12 sichtbar. Im eingeschalteten Zustand erscheint jedoch die Darstellung der aktivierten Leuchtanzeige 18 als Leuchtschrift auf der Vorderseite 12a der Abdeckung 12. Die zusätzlichen Leuchtelemente 24 sind dort als Lichtpunkte 28 sichtbar. Die Bauteile der Vorrichtung bleiben jedoch weiterhin für den Benutzer nicht sichtbar hinter der Abdeckung 12 verborgen.

Material und Dicke der Abdeckung 12 sind darüber hinaus im Bereich der Tastflächen 22 so auf die berührungsempfindlichen Sensoren 20 abgestimmt, dass die Sensoren 20 Berührungen der Tastflächen 22 auf der Vorderseite 12a der Abdeckung 12 registrieren.

Brauchbare Schichtdicken für den relevanten Bereich der Abdeckung 12 liegen bei ca. 1 mm, natürlich abhängig von der Leuchtstärke der Anzeige 18 und der Lichtstreuung des Materials, aus dem die Abdeckung 12 besteht. Ist die Schicht zu dick und streut das Material Licht sehr stark, dann wird die Darstellung unscharf. Im gezeigten Ausführungsbeispiel ist die Abdeckung 12 aus einem handelsüblichen Blinddeckel für das oben erwähnte Unterputz-Einbaugehäuse gebildet. Die Dicke des Blinddeckels wurde im Bereich der Leuchtanzeige 18 und der berührungsempfindlichen Sensoren 20 nachträglich durch Fräsen auf die notwendige Dicke von ca. 1 mm reduziert.

Eingeschaltet wird die Vorrichtung durch Berühren einer beliebigen Tastfläche 22. Meistens sprechen die berührungsempfindlichen Sensoren 20 bereits an, wenn man mit der Hand nur in deren Nähe kommt, sodass eine tatsächliche Berührung einer Tastfläche 22 gar nicht erforderlich ist. Nach dem Einschalten sind für den Benutzer sowohl die Darstellung der Leuchtanzeige 18 als auch die Lichtpunkte 28 der zusätzlichen Leuchtelemente 24 sichtbar, die dem Benutzer die Positionen der Tastflächen 22 angeben.

Im Falle des Raumthermostaten wird dem Benutzer nach dem Einschalten mittels der Leuchtanzeige 18 zunächst die aktuelle Raumtemperatur angezeigt. Durch Betätigung der Tasten 22 kann sich der Benutzer dann z.B. einen Sollwert anzeigen lassen und diesen gegebenenfalls herauf- oder heruntersetzen.

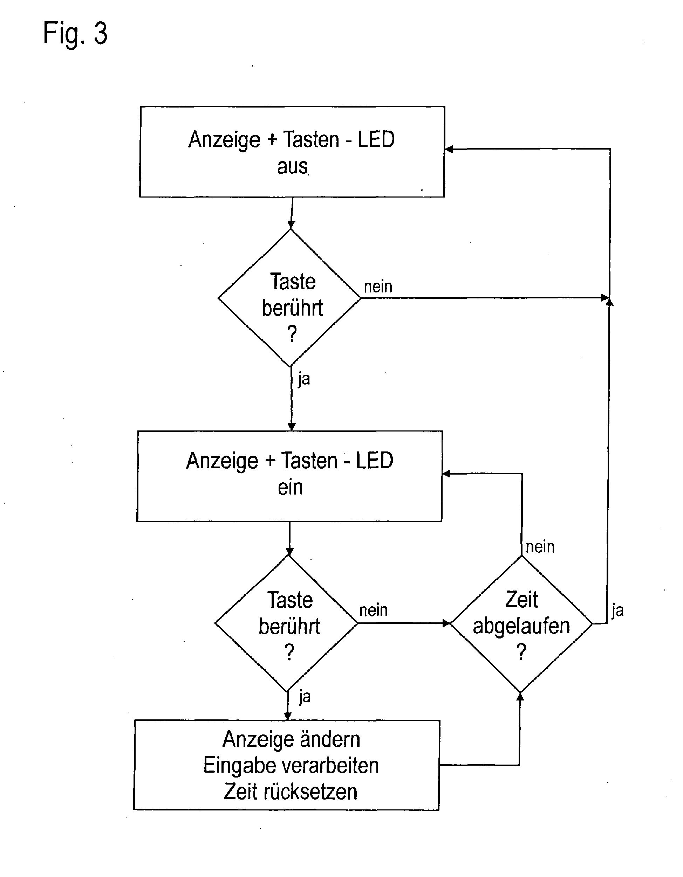

Die Abfolge der Tastenbetätigungen zur Durchführung bestimmter Funktionen der Vorrichtung variiert je nach Anwendung und spielt für die Erfindung keine wesentliche Rolle. In **Figur 3** ist daher nur ein grundlegender Bedienungsablauf ohne Details bezüglich möglicher Benutzereingaben und Anzeigenwechsel dargestellt.

Die Erfindung wurde am Beispiel eines Raumthermostaten erläutert, mit dem sich die Ist-Temperatur eines Raumes ablesen und die Solltemperatur einstellen lässt. Die Vorrichtung ist im Rahmen der Erfindung aber auch für eine Vielzahl anderer häuslicher bzw. gebäudetechnischer Anwendungen konfigurierbar.

### Bezugszeichenliste

- 10: Lichtschalter
- 12: Abdeckung
- 12a: Vorderseite der Abdeckung
- 12b: Rückseite der Abdeckung
- 14: Rahmen
- 16: Trägerplatine
- 18: Leuchtanzeige
- 20: berührungsempfindlicher Sensor
- 22: Tastfläche
- 24: Leuchtelement
- 26: Öffnung
- 28: Lichtpunkt

## Patentansprüche

1. Vorrichtung zur Anzeige und/oder Eingabe von Parametern, insbesondere für eine gebäudetechnische Anwendung, mit einem Gehäuse, in dem eine Leuchtanzeige (18) untergebracht ist,
**dadurch gekennzeichnet, dass** die Leuchtanzeige (18) hinter einer Abdeckung (12) angeordnet ist, wobei die Abdeckung (12) hinsichtlich Material und Dicke so ausgelegt ist, dass sie im ausgeschalteten Zustand der Leuchtanzeige (18) undurchsichtig, im eingeschalteten Zustand der Leuchtanzeige (18) jedoch für die Darstellung der Leuchtanzeige (18) durchlässig ist.

2. Vorrichtung nach Anspruch 1, **dadurch gekennzeichnet, dass** das Gehäuse ein Unterputz-Einbaugehäuse ist.

3. Vorrichtung nach Anspruch 1 oder 2, **dadurch gekennzeichnet, dass** die Abdeckung (12) ein Blinddeckel für das Gehäuse ist.

4. Vorrichtung nach einem der vorhergehenden Ansprüche, **dadurch gekennzeichnet, dass** die Dicke der Abdeckung (12) zumindest im Bereich der dahinter angeordneten Leuchtanzeige (18) etwa 1 mm beträgt.

5. Vorrichtung nach einem der vorhergehenden Ansprüche, **dadurch gekennzeichnet, dass** die Leuchtanzeige (18) mehrere Segment-Anzeigen aufweist.

6. Vorrichtung nach einem der vorhergehenden Ansprüche, **gekennzeichnet durch** eine oder mehrere hinter der Abdeckung (12) angeordnete berührungsempfindliche Sensoren (20), die eine oder mehrere Tastflächen (22) für Benutzereingaben definieren.

7. Vorrichtung nach Anspruch 6, **dadurch gekennzeichnet, dass** den Tastflächen (22) Leuchtelemente (24) zugeordnet sind, wobei die Abdeckung (12) hinsichtlich Material und Dicke so ausgelegt ist, dass sie im ausgeschalteten Zustand der Leuchtelemente (24) undurchsichtig, im eingeschalteten Zustand der Leuchtelemente (24) jedoch für die Darstellung der Leuchtelemente (24) durchlässig ist.

8. Vorrichtung nach Anspruch 7, **dadurch gekennzeichnet, dass** die berührungsempfindlichen Sensoren (20) eine Öffnung (26) aufweisen, durch die ein Leuchtelement (24) im eingeschalteten Zustand hindurchleuchtet.

9. Vorrichtung nach einem der vorhergehenden Ansprüche, **dadurch gekennzeichnet, dass** die Abdeckung (12) zumindest teilweise aus einem der folgenden Kunststoffe oder einer der folgenden Holzarten gebildet ist: PVC, ABS, Polystyrol; bzw. Fichte, Kiefer, Pappel.

10. Vorrichtung nach einem der vorhergehenden Ansprüche, **dadurch gekennzeichnet, dass** sie Teil eines Raumthermostaten ist.

11. Vorrichtung nach einem der vorhergehenden Ansprüche, **dadurch gekennzeichnet, dass** sie keine von außen sichtbaren Bedienelemente aufweist.

12. Vorrichtung nach einem der vorhergehenden Ansprüche, **dadurch gekennzeichnet, dass** die von außen sichtbare Außenseite der Abdeckung (12) glatt ist und keine Unterbrechungen aufweist.

13. Vorrichtung nach einem der vorhergehenden Ansprüche, **dadurch gekennzeichnet, dass** sowohl die Leuchtanzeige (18) als auch die Darstellung der Leuchtanzeige (18) unbeweglich sind.

14. Vorrichtung nach einem der vorhergehenden Ansprüche, **dadurch gekennzeichnet, dass** die Abdeckung (12) fest mit dem Gehäuse verbunden ist und bezüglich des Gebrauchs der Vorrichtung nicht zum Öffnen bestimmt ist.
